# EUROPEAN PATENT SPECIFICATION

(11) **EP 1 265 736 B1**
(45) Date of publication and mention of the grant of the patent: **24.01.2007**
(21) Application number: 01929423.0
(22) Date of filing: 06.03.2001
(51) Int. Cl.: B29C 43/16, B29C 35/16, B29C 69/02

(54) **PROCESS FOR COMPRESSION MOULDING SEMI-CRYSTALLINE POLYMERS**
PRESSVERFAHREN VON TEILKRISTALLINEN POLYMEREN
PROCEDE DE MOULAGE PAR COMPRESSION DE POLYMERES SEMI-CRISTALLINS

(30) Priority: 09.03.2000 IT RE000018; 09.03.2000 IT RE000019; 02.10.2000 IT RE000091
(43) Date of publication of application: 18.12.2002
(73) Proprietor: SACMI COOPERATIVA MECCANICI IMOLA SOCIETA' COOPERATIVA, 40026 Imola (Bologna) (IT)
(72) Inventor: PARRINELLO, Fiorenzo, I-40059 Medicina (IT)
(74) Representative: Corradini, Corrado
(86) International application number: PCT/EP2001/002584
(87) International publication number: WO 2001/066327

(56) References cited:
- EP-A- 0 282 941
- WO-A-87/04387
- US-A- 4 014 970
- US-A- 4 469 649
- US-A- 4 874 571

## Description

### Technical field

The present invention relates to the manufacture of semi-crystalline polymer articles.

### Background art

The feature of these polymers is that they are perfectly amorphous while in the molten state, but crystallize during cooling.

In particular, in these materials the melting point T_{F}, at which the crystalline phase is destroyed, is greater than the crystallisation initiation temperature T_{IC} at which crystals begin to form during cooling.

The semi-crystalline materials most known for industrial use are polypropylene (known hereinafter as PP), high density polyethylene (known hereinafter as HDPE), and polyethyleneterephthalate (known hereinafter as PET), these usually being used to form articles using moulds, either by an injection process or by a compression process.

In both these processes the material is brought to a working temperature substantially higher than the melting point T_{F}.

In the injection process the material is injected into a mould through one or more nozzles at a temperature much higher than the melting point to ensure that the molten material has a fluidity sufficient to eliminate or reduce to a maximum the shear stresses due to passage of the molten material at high velocity through small-diameter conduits typical of the moulds used in this process.

In the compression process a small measured quantity of material in the molten state is placed in a mould cavity into which a punch is made to enter, to force the material to rise into the interspace between the punch and cavity and assume its shape (mould filling), to then commence the cooling phase within the mould.

The temperature to which the material is brought in the compression moulding process of the known art is always much higher than the melting point, to ensure that the material remains sufficiently fluid during the entire mould filling time, crystal formation during the moulding stage being an undesirable obstacle.

In the first place, given the different viscosity of the amorphous and crystalline phases, crystal formation results in non-uniform filling of the mould.

In addition, the crystals which form during the moulding stage constitute, during subsequent cooling, crystallization germs which can lead to non-uniform distribution of the crystallization of the moulded article.

As a result, the article presents distortions and deformations due to differential shrinkage, together with an excessive fragility due to a macromolecular structure which differs from one region to another.

WO 87/04387 discloses a method for solid state stamping of fiber reinforced semi-crystaline polymeric thermoplastic composites providing a suitable, relatively broad range whereat the thermoplastic composites can be stamped in the solid state.

The range of temperature disclosed in this document is from above the crystalization onset temperature to slightly less the peack melting temperature.

The method disclosed by this document does not consent to avoid crystalization of the material of the stamped article, and therefore is not suitable for forming articles of semy-crystaline polimeric thermoplastic composites that must be in amorphous state to maintain their mechanical strength and their appearance perfectly transparent.

US 4,874,571 discloses an apparatus for calendering plastic web extruded from a slot die, and a method of operating this apparatus.

According to the method, the web is cooled after a first calendering action between a first pair of rolls, to a temperature less than 180°C, but no reference is made to the crystalization onset temperature of the material, and to means for avoiding crystalization of the final product.

A semi-crystalline material which merits particular attention is polyethyleneterephthalate, PET, in which the crystallization which takes place during cooling of the material from its molten state modifies its appearance from perfectly transparent to opaque, a fact which has until now limited the use of PET in manufacturing transparent articles.

In both the known processes, the duration of the moulding cycles for semi-crystalline materials is conditioned by the fact that the cycle initiation temperature T_{LAV}, i.e. the temperature of the material filling the mould, is always much higher than the melting point T_{F} of the material, the cooling times for the moulded article hence being very long.

This negative characteristic mostly affects injection processes, but also constitutes an important limiting factor in compression moulding processes, in particular for polyethyleneterephthalate when this is required to maintain its transparency, as will be apparent hereinafter.

The object of the invention is to provide a compression moulding process for semi-crystalline polymers, in particular polyethyleneterephthalate, which has a comparatively short cycle time compared with that of the known art, and preserves the physical and mechanical characteristics of the moulded articles.

### Disclosure of the invention

The process of the invention attains this object by virtue of the fact that the cycle initiation temperature T_{LAV} is determined not on the basis of material fluidity, but on the basis of maintaining the amorphous phase during mould filling.

This objective is achieved by the process according to the attached claim 1.

In the materials examined, the crystalline phase begins to form, during cooling, at a crystallization initiation temperature T_{IC} which is substantially less than the melting point T_{F}.

Hence according to the invention the material is brought outside the mould to a temperature higher than the melting point, and is fed into the mould at a temperature less than the melting point and just higher than the temperature T_{IC}, so reducing the cycle time by the time required to cool the material from T_{F} to T_{IC}.

This obviously restricts the applicability of the invention to compression processes alone.

The advantages of the invention are even greater if articles of polyethyleneterephthalate PET are to be moulded, while maintaining their transparency.

One of the peculiar characteristics of this material is that crystal formation takes place at differential rates within a well defined temperature range.

Starting from the amorphous phase in the molten state, crystal formation commences during cooling at a crystallization initiation temperature defined as T_{IC} and terminates at a crystallization termination temperature defined as T_{FC}, and is a maximum at the centre of the range defined by T_{IC} and T_{FC}, to reduce progressively to zero at the edges thereof.

Hence to obtain perfectly transparent polyethyleneterephthalate PET articles, the residence time within the region between T_{IC} and T_{FC} must be drastically reduced, this requiring a cooling power which is greater the higher the starting temperature. The diagram of crystal formation rate against temperature is in the form of a substantially symmetrical curve which progressively increases from zero and then decreases towards zero, and is located within a certain temperature range between T_{IC} and T_{FC}, the position of which on a cartesian diagram of which the horizontal axis represents temperature and the vertical axis indicates the crystal formation rate is influenced by the cooling rate.

As the cooling rate increases, the curve tends to shift to the left towards the lower temperatures, to assume a narrower configuration.

As an example, crystal formation is substantially avoided, or reduced to negligible terms, at a cooling rate of at least 3,5 °C/sec, and preferably at cooling rate between 4,0°C/sec and 8,0°C/sec depending from the wall thickness of the article.

Higher cooling rates are necessary for those articles of larger thicknesses, such as preforms, whereas for thin walled articles such as bottle caps, lower cooling rates can be used.

Suitable cooling rates are determined, case by case, by the expert of the art within the aforesaid range.

Finally, as certain mechanical characteristics of an article formed from semi-crystalline materials in general, and from PET in particular, also depend on the temperature at which the article remains in the mould, the advantages of the invention are even more apparent, which, by making it possible to use cooled moulds, enables the compression method to be used even to manufacture articles for which this was previously precluded for technical reasons.

For example, in manufacturing closure caps for known PET bottles for drinks, it is of great importance to use PET instead of PP or HDPE.

One of the greatest problems presented by known bottle caps formed of PP or HDPE is that the cap cannot be salvaged together with the bottle as neither PP nor HDPE is compatible with PET.

In addition PET acts as a barrier against gases such as O₂ and CO₂, both because of its intrinsic characteristics, and because of the possibility of enhancing said characteristics by known plasma treatment, which is unsuitable for the other said semi-crystalline materials.

However the use of PET in manufacturing bottle caps has been impossible up to now for various reasons, of which one of the most important is its high elastic modulus which makes it very difficult to remove the caps from the tip of the punch in an axial direction without unscrewing.

The use of PET for moulding closure caps is made possible by the invention, by virtue of the decrease in cooling time and energy, which make it economical to descend below the temperature at which the mechanical characteristics of the material stabilize, this being 80°C.

In this respect, cooling to below 80°C starting from a temperature much higher than the melting point makes injection systems uneconomical for moulding this type of material, even if the cooling rate is not critical below T_{FC}.

The following table shows certain significant parameters of the semi- crystalline polymers concerned with the present invention, which make the advantages offered thereby immediately apparent.

**TABLE**

| | |
|---|---|
| Melting point polypropylene PP T_{F.PP} | 165°C |
| Melting point high density polyethylene HDPE T_{F.HDPE} | 135°C |
| Melting point polyethyleneterephthalate PET T_{F.PET} | 270°C |
| Working temp. PP in injection process T_{LAV.I.PP} | 220-230°C |
| Working temp. HDPE in injection process T_{LAV.LHDPE} | 170-230°C |
| Working temp. PET in injection process T_{LAV.I.PET} | 290-320°C |
| Working temp. PP in compression process T_{LAV.C.PP} | 160-170°C |
| Working temp. HDPE in compression process T_{LAV.C.HDPE} | 130-140°C |
| Working temp. PET in compression process T_{LAV.C.PET} | 220°C |
| Crystallization initiation temp. PP T_{IC.PP} | 125°C |
| Crystallization initiation temp. HDPE T_{IC.HDPE} | 115°C |
| Crystallization initiation temp. PET T_{IC.PET} | 210°C |
| Crystallization termination temp. PET T_{IC.PET} | 120°C |

The merits and operational and constructional characteristics of the invention will be more apparent from the ensuing summary description illustrating three embodiments thereof given by way of non-limiting example with reference to the figures of the accompanying drawings.

Figure 1 is a general scheme of the plant for forming articles of semi-crystalline polymer.

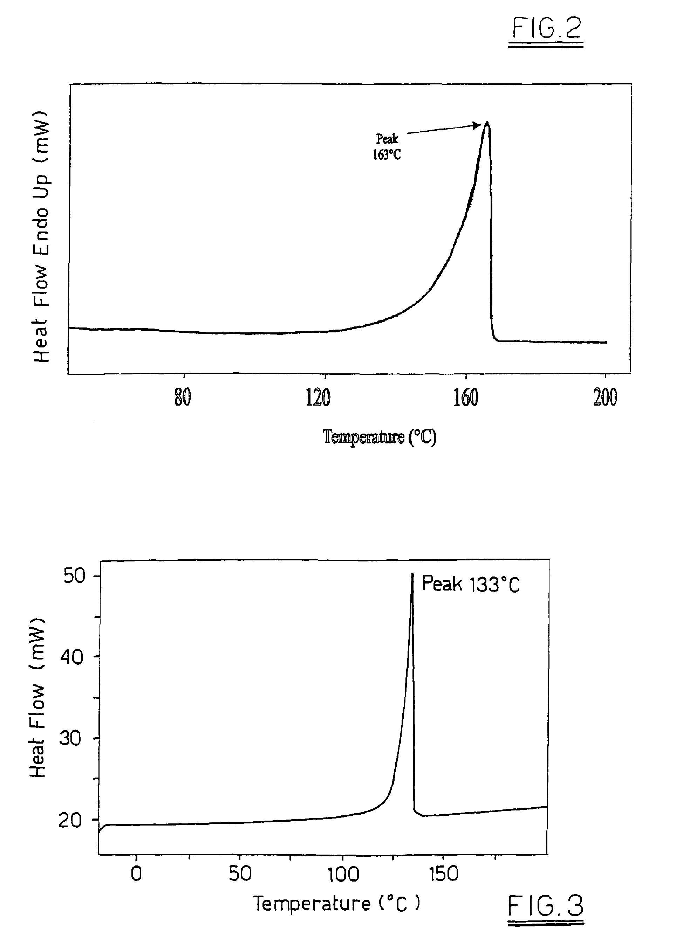

Figure 2 is a diagram showing the melting process for PP crystals with increasing temperature.

Figure 3 is a diagram showing the melting process for HDPE crystals with increasing temperature.

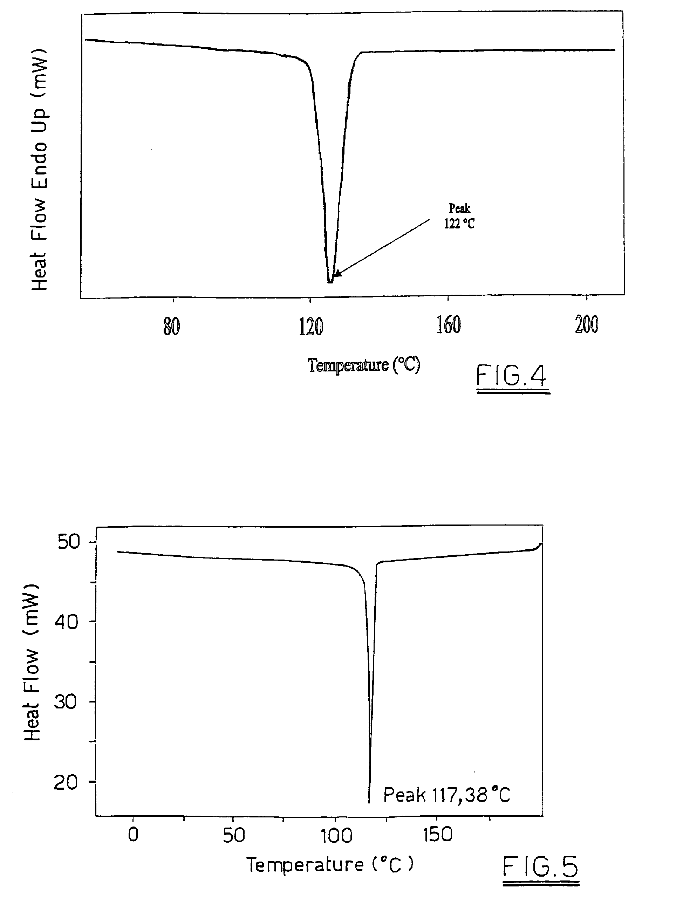

Figure 4 is a diagram showing the crystallization process for PP crystals with decreasing temperature.

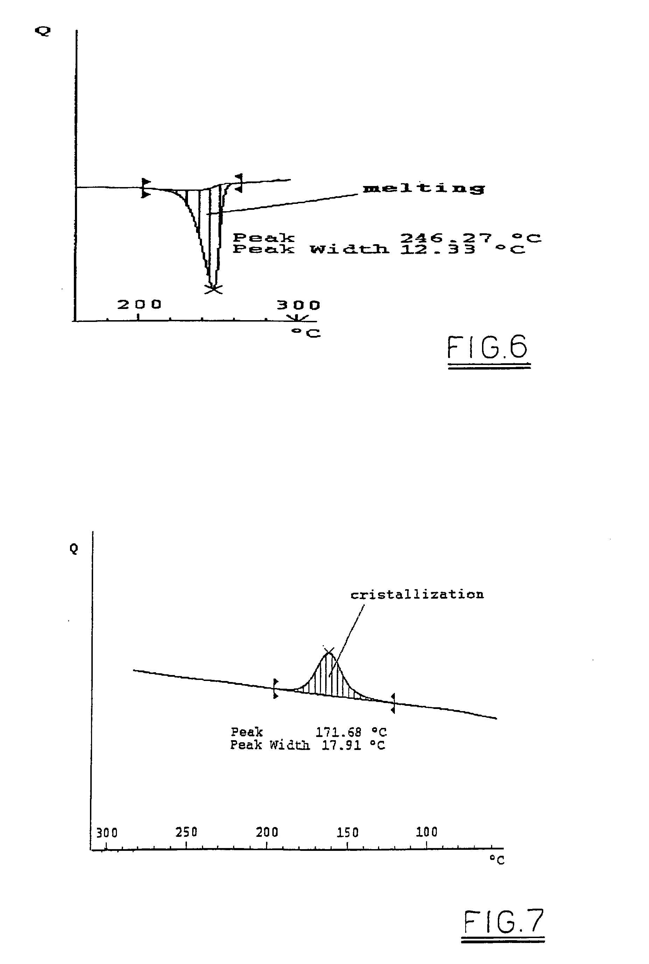

Figure 5 is a diagram showing the crystallization process for HDPE crystals with decreasing temperature.

Figure 6 is a diagram showing the crystallization process for polyethyleneterephthalate PET with increasing temperature.

Figure 7 is a diagram showing the crystallization process for polyethyleneterephthalate PET with decreasing temperature.

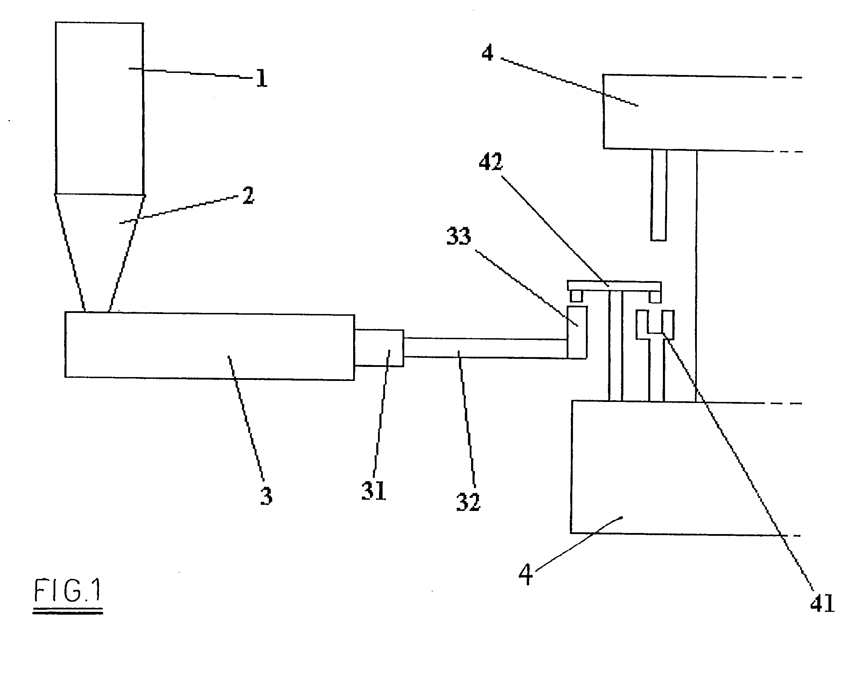

Figure 1 shows a continuous feeder (1) feeding polymer granules to the loading hopper (2) of an extruder (3).

If PP or HDPE is used, inside the extruder the material reaches temperatures higher than the melting point T_{F}, which as stated is T_{F.HDPE} = 135°C, and T_{F.PP} = 165°C.

In the final part of the extruder after the metering pump (31) there is connected a heat-exchanging static mixer (32) which rapidly cools the material to a temperature T_{LAV}, which for PP is T_{LAV.C.PP} = 150-160°C and for HDPE is T_{LAV.C.HDPE} = 130-140°C.

At this temperature the material is still free of crystals and leaves the nozzle (33) to be immediately divided into measured quantities and fed to the cavity (41) of a compression moulding machine (4).

In the illustrated example the machine is arranged to create an article which does not present particular mould-removal difficulties, such as a glass slightly flared and conical towards the mouth.

After inserting the measured quantity into the mould, the article is formed and initially cooled within the mould, extracted and finally its cooling completed to ambient temperature.

A second embodiment of the invention uses polyethyleneterephthalate PET to create a perfectly transparent preform, intended for subsequent blow-moulding of a bottle. Inside the extruder the material reaches temperatures higher than the melting point of the polyethyleneterephthalate, which as stated is T_{F.PET} = 270°C.

In the final part of the extruder the static mixer (32) rapidly cools the material to the temperature T_{LAV.PET}, which is close to 220°C, just greater than T_{IC.PET}, which is 210°C.

At this temperature T_{LAV.PET}, the material is still free of crystals and leaves the nozzle (33) to be immediately divided into pieces and fed, by a rotary cutting system (42), to the cavity (41) of a compression forming machine (4).

During and after its formation, the preform is rapidly cooled to a temperature lower than T_{FC.PET}, which is 120°C, below which the crystallization rate approximates to zero, the preform hence being stably in the amorphous state, and perfectly transparent. The preform is then extracted from the mould and further cooled to ambient temperature.

The third embodiment of the invention relates to the formation of closure caps for PET bottles.

Inside the extruder the previously dehumidified material reaches a temperature higher than the melting point of PET, which as stated is T_{F.PET} = 270°C.

In the final part of the extruder the static mixer (32) rapidly cools the material to the working temperature T_{LAV.PET} of 220°C.

At this temperature the material is still free of crystals and leaves the nozzle (33) to be immediately divided into pieces and fed, as in the preceding case, to the cavity (41) of a machine (4) for compression forming the cap.

During capsule formation the mould wall is cooled, such that the material of those portions in contact with the mould wall is at about 25°C.

In case the cap is required to be perfectly transparent, of similar appearance to glass, cooling must occur in the shortest possible time, to a temperature below T_{FC.PET}, which is 120°C, below which the crystallization rate approximates to zero, and hence the cap remains stably in the amorphous state, and is perfectly transparent. By cooling the mould, the temperature of the material is lowered below the stability threshold for the mechanical characteristics, which as stated is about 80°C, this ensuring a material elasticity which makes it possible to remove the cap from the mould punch by axial extraction without rotating it, as is normally the case with known PP and HDPE caps.

If it is desired to increase the barrier effect against gases such as O₂ and CO₂, this can be achieved by subjecting the cap to plasma treatment by the method usually used for PET bottles.

This method comprises feeding into the bottles a plasma vapour which creates a lining the thickness of which is typically less than 0.1 micron.

This material layer enables certain properties of the substrate to be enhanced, such as impermeability to gases.

The plasma treatment, well known to the expert of the art, is generally carried out with equipment manufactured by the German company LEYBOLD GmbH.

By means of the aforedescribed process a cap is obtained presenting a barrier effect suitable for not only carbonated but also for aromatized drinks, such as beer. Moreover the cap is of the same material as the bottle, enabling both to be salvaged without the bottle material becoming contaminated with incompatible extraneous material, for example in those cases in which the cap safety band remains inserted in the neck of the bottle after opening.

## Claims

1. A process for compression moulding semi-crystalline polymers, comprising the following operations:
- feeding measured quantities of material into a mould operating by compression at a temperature T_{LAV} close to but higher than the temperature T_{IC} at which crystallization commences during cooling;
- forming the article while maintaining the temperature close to T_{LAV};
**characterised in that**, before feeding it to the mould at the temperature T_{LAV,} the material is brought to a temperature exceeding the polymer melting point T_{F}, and
after forming the article is subjected to cooling to at least below the temperature T_{FC} at which the polymer crystallization rate is reduced to zero during cooling, the cooling rate being at least of 3,5 °C/sec in order to maintain the article in an amorphous, transparent state.

2. A process as claimed in claim 1, **characterised in that** the material is brought to a temperature exceeding T_{F} inside an extruder.

3. A process as claimed in claim 1, **characterised in that** the material is cooled to the temperature T_{LAV} inside the extruder.

4. A process as claimed in claim 1, **characterised in that** the material is cooled to the temperature T_{LAV} immediately on leaving the extruder.

5. A process as claimed in claim 1, **characterised in that** the article is cooled inside the mould.

6. A process as claimed in claim 1, **characterised in that** the article is cooled at least to below the the temperature T_{FC} at which the polymer crystallization rate is reduced to zero during cooling.

7. A process as claimed in claim 1, **characterised in that** within the temperature range between T_{IC} and T_{FC} the cooling rate is between 4,0 °C/sec and 8,0 °C/sec,

8. A process as claimed in claim 1, **characterised in that** the mould wall is cooled.

9. A process as claimed in claim 1, **characterised in that** the semi-crystalline polymer is polypropylene PP.

10. A process as claimed in claim 9, **characterised in that** the working temperature of the polypropylene, T_{LAV.PP}, lies between 160 and 170°C.

11. A process as claimed in claim 1, **characterised in that** the semi-crystalline polymer is high density polyethylene HDPE.

12. A process as claimed in claim 11, **characterised in that** the working temperature of the high density polyethylene, T_{LAV.HDPE}, lies between 130 and 140°C.

13. A process as claimed in claim 1, **characterised in that** the semi-crystalline polymer is polyethyleneterephthalate PET.

14. A process as claimed in claim 13, **characterised in that** the working temperature of the polyethyleneterephthalate, T_{LAV.PET}, equals 220°C.

## Patentansprüche

1. Verfahren zum Formpressen halbkristalliner Polymere, welches die folgenden Vorgänge umfasst:
- Zufuhr gemessener Mengen von Werkstoff in eine Pressform, die mittels Pressen bei einer Temperatur T_{LAV} nahe bei, jedoch höher als die Temperatur T_{IC} arbeitet, bei welcher die Kristallisation während der Abkühlung beginnt;
- Formen des Gegenstandes, während die Temperatur nahe bei T_{LAV} aufrechterhalten wird;
**dadurch gekennzeichnet, dass** der Werkstoff vor der Zufuhr desselben bei der Temperatur T_{LAV} zu der Pressform auf eine Temperatur gebracht wird, die den Polymerschmelzpunkt T_{F} überschreitet, und
der Gegenstand nach der Formgebung der Abkühlung auf mindestens unter die Temperatur T_{FC} unterzogen wird, bei der die Polymerkristallisationsrate während der Abkühlung auf Null verringert wird, wobei die Abkühlungsrate mindestens 3,5°C/sec. beträgt, um den Gegenstand in einem amorphen, transparenten Zustand zu halten.

2. Verfahren nach Anspruch 1,
**dadurch gekennzeichnet, dass**
der Werkstoff innerhalb eines Extruders auf eine die Temperatur T_{F} überschreitende Temperatur gebracht wird.

3. Verfahren nach Anspruch 1,
**dadurch gekennzeichnet, dass**
der Werkstoff innerhalb des Extruders auf die Temperatur T_{LAV} abgekühlt wird.

4. Verfahren nach Anspruch 1,
**dadurch gekennzeichnet, dass**
der Werkstoff unmittelbar nach Verlassen des Extruders auf die Temperatur T_{LAV} abgekühlt wird.

5. Verfahren nach Anspruch 1,
**dadurch gekennzeichnet, dass**
der Gegenstand innerhalb der Pressform gekühl wird.

6. Verfahren nach Anspruch 1,
**dadurch gekennzeichnet, dass**
der Gegenstand mindestens unter die Temperatur T_{FC} abgekühlt wird, bei der die Polymerkristallisationsrate während der Abkühlung auf Null verringert wird.

7. Verfahren nach Anspruch 1,
**dadurch gekennzeichnet, dass**
die Abkühlungsrate innerhalb des Temperaturbereiches zwischen T_{IC} und T_{FC} zwischen 4, 0°C/sec. und 8,0°C/sec. liegt.

8. Verfahren nach Anspruch 1,
**dadurch gekennzeichnet, dass**
die Pressformwand gekühlt wird.

9. Verfahren nach Anspruch 1,
**dadurch gekennzeichnet, dass**
das halbkristalline Polymer Polypropylen PP ist.

10. Verfahren nach Anspruch 9,
**dadurch gekennzeichnet, dass**
die Betriebstemperatur des Polypropylens T_{LAV.PP} zwischen 160 und 170°C liegt.

11. Verfahren nach Anspruch 1,
**dadurch gekennzeichnet, dass**
das halbkristalline Polymer Polyethylen hoher Dichte HDPE ist.

12. Verfahren nach Anspruch 11,
**dadurch gekennzeichnet, dass**
die Betriebstemperatur des Polypropylens T_{LAV.HDPE} zwischen 130 und 140°C liegt.

13. Verfahren nach Anspruch 1,
**dadurch gekennzeichnet, dass**
das halbkristalline Polymer Polyethyleneterephthlat PET ist.

14. Verfahren nach Anspruch 13,
**dadurch gekennzeichnet, dass**
die Betriebstemperatur des Polypropylens T_{LAV.PET} 220°C entspricht.

## Revendications

1. Procédé de moulage par compression de polymères semi-cristallins, comprenant les opérations suivantes :
- la transmission de quantités mesurées d'un matériau dans un moule fonctionnant par compression à une température T_{LAV} proche de la température T_{IC} à laquelle commence la cristallisation pendant le refroidissement mais supérieure à cette température, et
- la mise en forme de l'article avec maintien de la température à proximité de T_{LAV},
**caractérisé en ce que**, avant sa transmission au moule à la température T_{LAV}, le matériau est mis à une température supérieure à la température de fusion du polymère T_{F}, et
après la mise en forme, l'article est soumis à un refroidissement à une température au moins inférieure à la température T_{FC} à laquelle la vitesse de cristallisation du polymère est réduite à une valeur nulle pendant le refroidissement, la vitesse de refroidissement étant d'au moins 3,5 °C/s, afin que l'article soit maintenu à un état transparent amorphe.

2. Procédé selon la revendication 1, **caractérisé en ce que** le matériau est mis à une température supérieure à T_{F} à l'intérieur d'une extrudeuse.

3. Procédé selon la revendication 1, **caractérisé en ce que** le matériau est refroidi à la température T_{AV} à l'intérieur de l'extrudeuse.

4. Procédé selon la revendication 1, **caractérisé en ce que** le matériau est refroidi à la température T_{LAV} dès qu'il quitte l'extrudeuse.

5. Procédé selon la revendication 1, **caractérisé en ce que** l'article est refroidi à l'intérieur du moule.

6. Procédé selon la revendication 1, **caractérisé en ce que** l'article est refroidi au moins au-dessous de la température T_{FC} à laquelle la vitesse de cristallisation du polymère est réduite à zéro pendant le refroidissement.

7. Procédé selon la revendication 1, **caractérisé en ce que**, dans la plage de températures comprise entre T_{IC} et T_{FC}, la vitesse de refroidissement a une valeur comprise entre 4,0 et 8,0 °C/s.

8. Procédé selon la revendication 1, **caractérisé en ce que** la paroi du moule est refroidie.

9. Procédé selon la revendication 1, **caractérisé en ce que** le polymère semi-cristallin est le polypropylène PP.

10. Procédé selon la revendication 9, **caractérisé en ce que** la température de travail du polypropylène T_{LAV.PP} est comprise entre 160 et 170 °C.

11. Procédé selon la revendication 1, **caractérisé en ce que** le polymère semi-cristallin est du polyéthylène haute densité HDPE.

12. Procédé selon la revendication 11, **caractérisé en ce que** la température de travail du polyéthylène haute densité T_{LAV.HDPE} est comprise entre 130 et 140 °C.

13. Procédé selon la revendication 1, **caractérisé en ce que** le polymère semi-cristallin est le téréphtalate de polyéthylène PET.

14. Procédé selon la revendication 13, **caractérisé en ce que** la température de travail du téréphtalate de polyéthylène T_{LAV.PET} est égale à 220 °C.
